# EUROPEAN PATENT APPLICATION

(11) **EP 4 718 579 A1**
(43) Date of publication of application: **01.04.2026**
(21) Application number: 24810383.0
(22) Date of filing: 21.05.2024
(51) Int. Cl.: H01M 10/613, H01M 10/625, H01M 10/6556, H01M 50/249, H01M 50/244

(54) **CASING, BATTERY PACK AND VEHICLE**

(30) Priority: 22.05.2023 CN 202321251764 U
(71) Applicant: Beijing Chehejia Automobile Technology Co., Ltd., Beijing 101300 (CN)
(72) Inventor: GUO, Haining, Beijing 101300 (CN)
(74) Representative: Maiwald GmbH
(86) International application number: PCT/CN2024/094414
(87) International publication number: WO 2024/240141

(57) **Abstract**

Provided are a casing, a battery pack and a vehicle. The casing comprises a liquid cooling plate and a side panel connected to the upper surface of the liquid cooling plate and arranged around the circumference of the liquid cooling plate; the liquid cooling plate comprises a body and an outer connecting plate surrounding the periphery of the body; the upper surface of the outer connecting plate is distant from the side panel relative to the upper surface of the body; the lower surface of the side panel comprises a first step surface and a second step surface; the first step surface is opposite to the upper surface of the body; the second step surface protrudes towards the outer connecting plate relative to the first step surface; a sealing member is provided between the first step surface and the upper surface of the body; and the second step surface is attached to and sealedly connected to the upper surface of the outer connecting plate.

## Description

### CROSS-REFERENCE TO RELATED APPLICATION

This application claims the priority of Chinese Patent Application No. 2023212517649 filed on May 22, 2023, the entire contents of which are incorporated herein by reference.

### FIELD

The present invention relates to the field of vehicles, and more particularly to a casing, a battery pack and a vehicle.

### BACKGROUND

In the related art, in order to realize the heat dissipation of a battery pack, a bottom plate of a casing is usually configured as a liquid cooling plate, which is hermetically connected with a frame of the casing through a structural sealant, and a sealing foam is sandwiched between the liquid cooling plate and the frame of the casing to achieve double sealing. However, when the structural sealant fails to seal, water outside the casing will soak the sealing foam, resulting in sealing failure.

### SUMMARY

The technical problem to be solved by embodiments of the present invention is to provide a casing, regarding the defects and shortcomings in the related art. The casing includes a lateral enclosure panel and a bottom liquid cooling plate, the liquid cooling plate includes a body and an outer connecting plate surrounding a periphery of the body, an upper surface of the outer connecting plate is farther away from the lateral enclosure panel relative to an upper surface of the body, a lower surface of the lateral enclosure panel includes a first step surface and a second step surface, the first step surface is opposite to the upper surface of the body, and the second step surface protrudes towards the outer connecting plate relative to the first step surface. A sealing element is arranged between the first step surface and the upper surface of the body, and the second step surface is fitted to and hermetically connected with the upper surface of the outer connecting plate, so that the sealing fit between the second step surface and the outer connecting plate and the sealing element arranged between the body and the first step surface may form the double sealing. Since the upper surface of the body is higher than the upper surface of the outer connecting plate, the sealing element is arranged at a higher position than a sealing contact surface between the second step surface and the outer connecting plate, so that when the sealing failure between the second step surface and the outer connecting plate causes water outside the lateral enclosure panel to permeate along the outer connecting plate, the sealing element at the higher position will not be eroded by the water, thus avoiding sealing failure.

Embodiments of the present invention also provide a battery pack.

Embodiments of the present invention also provide a vehicle.

The casing according to the embodiments of the present invention includes a liquid cooling plate and a lateral enclosure panel connected to an upper surface of the liquid cooling plate and arranged around a periphery of the liquid cooling plate, the liquid cooling plate includes a body and an outer connecting plate surrounding a periphery of the body, an upper surface of the outer connecting plate is farther away from the lateral enclosure panel relative to the upper surface of the body, a lower surface of the lateral enclosure panel includes a first step surface and a second step surface, the first step surface is opposite to the upper surface of the body, the second step surface protrudes towards the outer connecting plate relative to the first step surface, a sealing element is arranged between the first step surface and the upper surface of the body, and the second step surface is fitted to and hermetically connected with the upper surface of the outer connecting plate.

In the casing according to the embodiments of the present invention, the liquid cooling plate includes the body and the lateral enclosure panel surrounding the periphery of the body, the lower surface of the lateral enclosure panel includes the first step surface opposite to the body and the second step surface protruding towards the outer connecting plate relative to the first step surface, the sealing element is arranged between the body and the first step surface, and the second step surface is hermetically connected with the outer connecting plate. Thus, the second step surface and the outer connecting plate may form the primary sealing, and the sealing element arranged between the body and the first step surface may form the secondary sealing, which results in a good double sealing effect and a high reliability. Moreover, since the second step surface protrudes towards the outer connecting plate relative to the first step surface, the first step surface is higher than the second step surface, so that the sealing element is arranged at the higher position than the sealing contact surface between the second step surface and the outer connecting plate. Therefore, when the sealing failure between the second step surface and the outer connecting plate causes the water outside the lateral enclosure panel to permeate along the outer connecting plate, the sealing member at the higher position will not be eroded by the water, thus avoiding the sealing failure.

In some embodiments, the lateral enclosure panel includes a front beam and a rear beam arranged opposite to each other along a length direction of a bottom plate, and two side beams connected between the front beam and the rear beam and arranged opposite to each other in a width direction of the bottom plate, where the front beam includes a front end plate and two inclined plates respectively connected to both sides of the front end plate, the two inclined plates are correspondingly connected with the two side beams, and the two inclined plates extend in a direction running away from the side beams and are obliquely arranged in a direction approaching each other.

In some embodiments, the front end plate and the two inclined plates are integrally formed, a joint of each inclined plate and the front end plate is rounded, and a thickness of each inclined plate gradually decreases along a direction approaching the front end plate.

In some embodiments, the casing further includes a thermal insulation pad fitted to a side of the liquid cooling plate facing away from the lateral enclosure panel.

In some embodiments, the casing further includes a bottom guard plate, and the bottom guard plate is fitted to a side of the thermal insulation pad facing away from the liquid cooling plate.

In some implementations, a side of the bottom guard plate facing away from the thermal insulation pad has a second connecting groove recessed towards the thermal insulation pad, and the bottom guard plate, the thermal insulation pad, the liquid cooling plate and the lateral enclosure panel are connected through a connector, and a flange head of the connector is fitted in the second connecting groove.

In some embodiments, the side of the thermal insulation pad facing away from the liquid cooling plate has a first connecting groove recessed towards the liquid cooling plate, and a groove wall of the second connecting groove is arranged in the first connecting groove and fitted to an inner wall of the first connecting groove.

In some implementations, a part of the bottom guard plate protrudes away from the thermal insulation pad to form a cavity which opens towards the thermal insulation pad, the bottom guard plate includes an outer ring edge surrounding an opening of the cavity, and the outer ring edge is fitted to and connected with the thermal insulation pad.

The battery pack according to the embodiments of the present invention includes the casing according to the above embodiments.

In the battery pack according to the embodiments of the present invention, the above casing is used, the liquid cooling plate includes the body and the lateral enclosure panel surrounding the periphery of the body, the lower surface of the lateral enclosure panel includes the first step surface opposite to the body and the second step surface protruding towards the outer connecting plate relative to the first step surface, the sealing member is arranged between the body and the first step surface, and the second step surface is hermetically connected with the outer connecting plate. Thus, the second step surface and the outer connecting plate may form the primary sealing, and the sealing element arranged between the body and the first step surface may form the secondary sealing, which results in a good double sealing effect and a high reliability. Moreover, since the second step surface protrudes towards the outer connecting plate relative to the first step surface, the first step surface is higher than the second step surface, so that the sealing element is arranged at the higher position than the sealing contact surface between the second step surface and the outer connecting plate. Therefore, when the sealing failure between the second step surface and the outer connecting plate causes the water outside the lateral enclosure panel to permeate along the outer connecting plate, the sealing member at the higher position will not be eroded by the water, thus avoiding the sealing failure. Thus, the battery pack has high safety and long service life.

The vehicle according to the embodiments of the present invention includes the battery pack according to the above embodiments.

In the vehicle according to the embodiments of the present invention, the above battery pack is used, the liquid cooling plate includes the body and the lateral enclosure panel surrounding the periphery of the body, the upper surface of the outer connecting plate is recessed relative to the body, the lower surface of the lateral enclosure panel includes the first step surface opposite to the body and the second step surface protruding towards the outer connecting plate relative to the first step surface, the sealing member is arranged between the body and the first step surface, and the second step surface is hermetically connected with the outer connecting plate. Thus, the second step surface and the outer connecting plate may form the primary sealing, and the sealing element arranged between the body and the first step surface may form the secondary sealing, which results in a good double sealing effect and a high reliability. Moreover, since the second step surface protrudes towards the outer connecting plate relative to the first step surface, the first step surface is higher than the second step surface, so that the sealing element is arranged at the higher position than the sealing contact surface between the second step surface and the outer connecting plate. Therefore, when the sealing failure between the second step surface and the outer connecting plate causes the water outside the lateral enclosure panel to permeate along the outer connecting plate, the sealing member at the higher position will not be eroded by the water, thus avoiding the sealing failure. Thus, the battery pack has high safety and the vehicle has great performance.

### BRIEF DESCRIPTION OF THE DRAWINGS

Fig. 1 is a schematic view of a casing according to an embodiment of the present invention.
Fig. 2 is an exploded view of a casing according to an embodiment of the present invention.
Fig. 3 is a schematic view of a front beam of a casing according to an embodiment of the present invention.
Fig. 4 is a sectional view of a casing according to an embodiment of the present invention.
Fig. 5 is a partial schematic view of a casing according to an embodiment of the present invention, in which a thermal insulation pad is shown.
Fig. 6 is a partially enlarged view of the casing shown in Fig. 5.
Fig. 7 is a schematic view of a casing according to an embodiment of the present invention, in which a bottom guard plate is shown.
Fig. 8 is a partially enlarged view of the casing shown in Fig. 7.

Reference signs:
liquid cooling plate 1, body 11, outer connecting plate 12, lateral enclosure panel 2, first step surface 21, second step surface 22, front beam 23, front end plate 231, inclined plate 232, rear beam 24, side beam 25, sealing member 3, thermal insulation pad 4, first connecting groove 41, bottom guard plate 5, second connecting groove 51 and connector 6.

### DETAILED DESCRIPTION

Hereinafter, embodiments of the present invention will be described in detail, examples of which are illustrated in the accompanying drawings. The embodiments described below by referring to the accompanying drawings are illustrative and are intended to explain the present invention, and should not be construed as limiting the present invention.

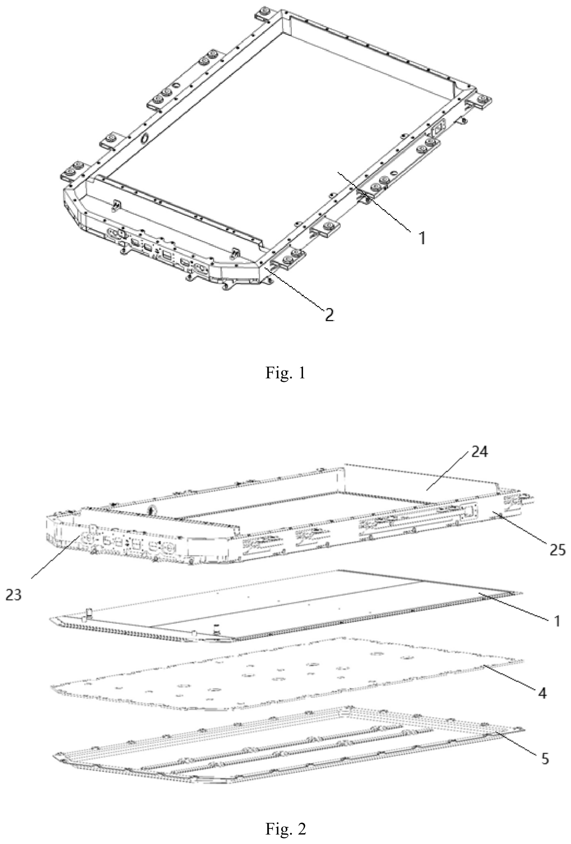

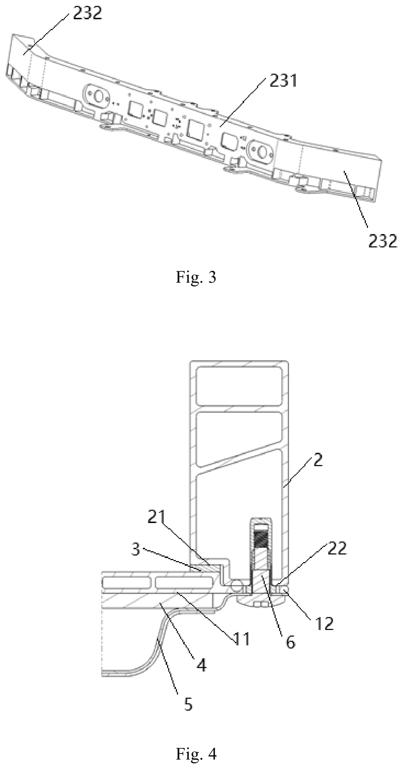

As shown in Figs. 1- 8, a casing according to embodiments of the present invention includes a liquid cooling plate 1 and a lateral enclosure panel 2 connected to an upper surface of the liquid cooling plate 1 and arranged around a periphery of the liquid cooling plate 1. The liquid cooling plate 1 includes a body 11 and an outer connecting plate 12 surrounding a periphery of the body 11, an upper surface of the outer connecting plate 12 is farther away from the lateral enclosure panel 2 relative to the upper surface of the body 11, and a lower surface of the lateral enclosure panel 2 includes a first step surface 21 and a second step surface 22 (as shown in Fig. 4). The first step surface 21 is opposite to the upper surface of the body 11, and the second step surface 22 protrudes towards the outer connecting plate 12 relative to the first step surface. A sealing member 3 is arranged between the first step surface 21 and the upper surface of the body 11, and the second step surface 22 is fitted to and hermetically connected with the upper surface of the outer connecting plate 12. In other words, the joint between the lateral enclosure panel 2 and the liquid cooling panel 1 includes two step surfaces with different heights, the outer step surface (the second step surface 22) is lower and the inner step surface (the first step surface 21) is higher.

It may be understood that the sealing fit between the second step surface 22 and the outer connecting plate 12 and the sealing element 3 arranged between the body 11 and the first step surface 21 may form double sealing, and since the upper surface of the body 11 is higher than the upper surface of the outer connecting plate 12, the sealing element 3 is arranged at a higher position than a sealing contact surface between the second step surface 22 and the outer connecting plate 12, so that when the sealing failure between the second step surface 22 and the outer connecting plate 12 causes water outside the lateral enclosure panel 2 to permeate along the outer connecting plate 12, the sealing element 3 at the higher position will not be eroded by the water, thus avoiding sealing failure.

In the casing according to the embodiments of the present invention, the liquid cooling plate 1 includes the body 11 and the lateral enclosure panel surrounding the periphery of the body 11, the upper surface of the outer connecting plate 12 is recessed relative to the body 11, the lower surface of the lateral enclosure panel includes the first step surface 21 opposite to the body 11 and the second step surface 22 protruding towards the outer connecting plate 12 relative to the first step surface 21, the sealing element 3 is arranged between the body 11 and the first step surface 21, and the second step surface 22 is hermetically connected with the outer connecting plate 12. Thus, the second step surface 22 and the outer connecting plate 12 may form the primary sealing, and the sealing element 3 arranged between the body 11 and the first step surface 21 may form the secondary sealing, which results in a good double sealing effect and a high reliability. Moreover, since the second step surface 22 protrudes towards the outer connecting plate 12 relative to the first step surface 21, the first step surface 21 is higher than the second step surface 22, so that the sealing element 3 is arranged at the higher position than the sealing contact surface between the second step surface 22 and the outer connecting plate 12. Therefore, when the sealing failure between the second step surface 22 and the outer connecting plate 12 causes the water outside the lateral enclosure panel 2 to permeate along the outer connecting plate 12, the sealing member 3 at the higher position will not be eroded by the water, thus avoiding the sealing failure.

In some embodiments, as shown in Figs. 2 and 3, the lateral enclosure panel 2 includes a front beam 23 and a rear beam 24 arranged opposite to each other along a length direction of a bottom plate, and two side beams 25 connected between the front beam 23 and the rear beam 24 and arranged opposite to each other in a width direction of the bottom plate. The front beam 23 includes a front end plate 231 and two inclined plates 232 respectively connected to both sides of the front end plate 231, the two inclined plates 232 are correspondingly connected with the two side beams 25, and the two inclined plates 232 extend in a direction running away from the side beams 25 and are obliquely arranged in a direction approaching each other.

In other words, as shown in Fig. 3, the front beam 23 of the lateral enclosure panel 2 of the present invention is an arched beam protruding outwards,
In some embodiments, the front end plate 231 and the two inclined plates 232 are integrally formed. It may be understood that the integrally formed front beam 23 is simple in structure and low in cost, and there are no problems such as sealing failure at a welding position of multi-section welded members.

In some embodiments, the joint of the inclined plate 232 and the front end plate 231 is rounded, and a thickness of the inclined plate 232 gradually decreases in a direction approaching the front end plate 231. It may be understood that the joint of the inclined plate 232 and the front end plate 231 is designed as a rounded corner, which is beneficial to molding and manufacturing, and may reduce the stress concentration at the corner. In addition, the gradually thinned inclined plate 232 may not only reduce the materials, but also ensure the structural strength of the joint of the inclined plate 232 and the side beam 25.

In some embodiments, as shown in Fig. 4, Fig. 5 and Fig. 6, the casing further includes a thermal insulation pad 4, and the thermal insulation pad 4 is attached to a side of the liquid cooling plate 1 facing away from the lateral enclosure panel 2. Therefore, the thermal insulation pad 4 may be used for thermal insulation of the casing.

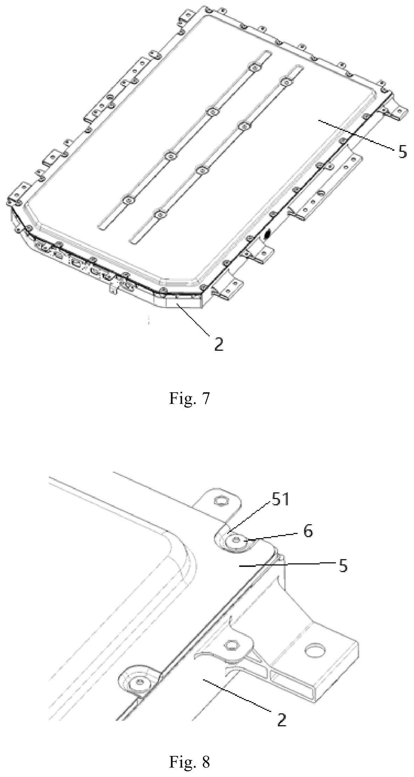

In some embodiments, as shown in Figs. 7 and 8, the casing further includes a bottom guard plate 5, and the bottom guard plate 5 is attached to a side of the thermal insulation pad 4 facing away from the liquid cooling plate 1. It may be understood that the bottom guard plate 5 may enhance the structural strength of the casing and avoid the impact of foreign objects on the bottom of the casing.

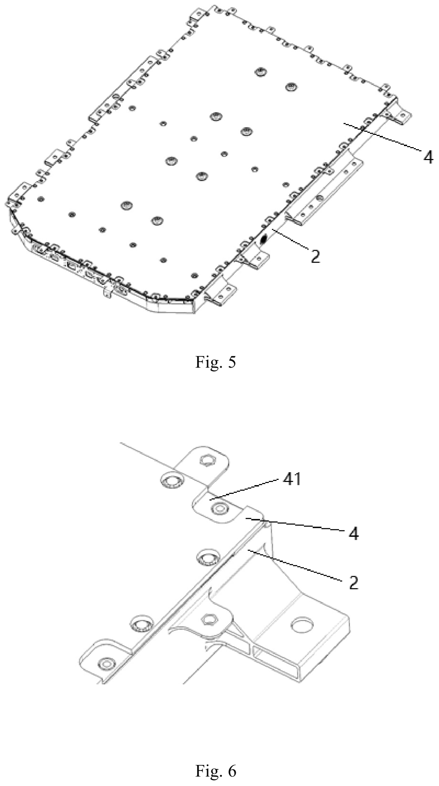

In some embodiments, as shown in Figs. 5-8, a side of the bottom guard plate 5 facing away from the thermal insulation pad 4 has a second connecting groove 51 (as shown in Fig. 8) recessed towards the thermal insulation pad 4, and the bottom guard plate 5, the thermal insulation pad 4, the liquid cooling plate 1 and the lateral enclosure panel 2 are connected by a connector 6, and a flange head of the connector 6 is fitted in the second connecting groove 51. In some embodiments, the flange head of the connector 6 is designed as a "low arch". It may be understood that this may prevent the connector 6 from being damaged when the battery is bottomed out, and may improve the connection and sealing reliability at the screwed position.

It may be understood that there are two ways to arrange the second connecting groove 52. One way is to directly dig out the second connecting groove 52 on a back of the bottom guard plate 5, and correspondingly, a thickness of the bottom guard plate 5 will limit a depth of the second connecting groove 52. The other way is to form the second connecting groove 52 by stamping, in which a local area of the bottom guard plate 5 is deformed and depressed to form the second connecting groove 52. In this way, the depth of the second connecting groove 52 is not limited by the thickness of the bottom guard plate 5, but an outer bottom wall of the second connecting groove 52 formed by stamping is uneven with other areas of the bottom guard plate 5. Therefore, it is necessary to solve the fit problem between the bottom guard plate 5 and the thermal insulation pad 4 at the joint thereof during actual assembling.

In some specific embodiments, the side of the insulation pad 4 facing away from the liquid cooling plate 1 has a first connecting groove 41 (as shown in Fig. 6), and a groove wall of the second connecting groove 51 is arranged in the first connecting groove 41 and fitted to an inner wall of the first connecting groove 41. Thus, the groove wall of the second connecting groove 51 is fitted in the first connecting groove 41, and hence the bottom guard plate 5 located at a periphery of the second connecting groove 51 may keep fitted with the thermal insulation pad 4.

In some embodiments, as shown in Fig. 4, a part of the bottom guard plate 5 protrudes away from the thermal insulation pad 4 to form a cavity which opens towards the thermal insulation pad 4, the bottom guard plate 5 includes an outer ring edge surrounding an opening of the cavity, and the outer ring edge is fitted to and connected with the thermal insulation pad 4. That is, the joint between the bottom guard plate 5 and the thermal insulation pad 4 is sealed.

In some embodiments, the liquid cooling plate 1 is made of an aluminum profile.

A battery pack according to the embodiments of the present invention includes the casing according to the above embodiments.

In the battery pack according to the embodiments of the present invention, the above casing is used, the liquid cooling plate 1 includes the body 11 and the lateral enclosure panel 2 surrounding the periphery of the body 11, the lower surface of the lateral enclosure panel 2 includes the first step surface 21 opposite to the body 11 and the second step surface 22 protruding towards the outer connecting plate 12 relative to the first step surface 21, the sealing member 3 is arranged between the body 11 and the first step surface 21, and the second step surface 22 is hermetically connected with the outer connecting plate 12. Thus, the second step surface 22 and the outer connecting plate 12 may form the primary sealing, and the sealing element 3 arranged between the body 11 and the first step surface 21 may form the secondary sealing, which results in a good double sealing effect and a high reliability. Moreover, since the upper surface of the body 11 is higher than the upper surface of the outer connecting plate 12, the sealing element 3 is arranged at the higher position than the sealing contact surface between the second step surface 22 and the outer connecting plate 12. Therefore, when the sealing failure between the second step surface 22 and the outer connecting plate 12 causes the water outside the lateral enclosure panel 2 to permeate along the outer connecting plate 12, the sealing member 3 at the higher position will not be eroded by the water, thus avoiding the sealing failure. Thus, the battery pack has high safety and long service life.

A vehicle according to the embodiments of the present invention includes the battery pack according to the above embodiments.

In the vehicle according to the embodiments of the present invention, the above battery pack is used, the liquid cooling plate 1 includes the body 11 and the lateral enclosure panel 2 surrounding the periphery of the body 11, the lower surface of the lateral enclosure panel 2 includes the first step surface 21 opposite to the body 11 and the second step surface 22 protruding towards the outer connecting plate 12 relative to the first step surface 21, the sealing member 3 is arranged between the body 11 and the first step surface 21, and the second step surface 22 is hermetically connected with the outer connecting plate 12. Thus, the second step surface 22 and the outer connecting plate 12 may form the primary sealing, and the sealing element 3 arranged between the body 11 and the first step surface 21 may form the secondary sealing, which results in a good double sealing effect and a high reliability. Moreover, since the upper surface of the body 11 is higher than the upper surface of the outer connecting plate 12, the sealing element 3 is arranged at the higher position than the sealing contact surface between the second step surface 22 and the outer connecting plate 12. Therefore, when the sealing failure between the second step surface 22 and the outer connecting plate 12 causes the water outside the lateral enclosure panel 2 to permeate along the outer connecting plate 12, the sealing member 3 at the higher position will not be eroded by the water, thus avoiding the sealing failure. Thus, the battery pack has high safety and the vehicle has great performance.

In the descriptions of the present invention, it is to be understood that the terms "central", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial", "circumferential", etc. indicate orientations or positional relationships based on those shown in the drawings, are only intended to facilitate descriptions of the present invention and to simplify descriptions, and are not intended to indicate or imply that the device or element referred to must have a particular orientation, and be constructed and operated in a particular orientation. Therefore, these terms cannot be understood as limitations of the present invention.

Moreover, the terms "first" and "second" are used for purposes of description only and cannot be understood as indicating or implying relative importance or implicitly specifying the number of technical features indicated. Thus, a feature defined with the term "first" or "second" may expressly or impliedly include at least one such feature. In the descriptions of the present invention, "a plurality of" means at least two, such as two, three, etc., unless expressly and specifically limited otherwise.

In the present invention, unless expressly specified or limited otherwise, the terms "mount", "connect", "couple", "fix", and the like should be understood broadly and may indicate, such as a fixed connection, a detachable connection, or a one-piece unit; a mechanical connection, an electrical connection, or a communication with each other; a direct connection, an indirect connection through an intermediate media, and intercommunication or interaction of two elements, unless expressly limited otherwise. For those skilled in the art, the specific meaning of the above terms in the present invention may be understood according to the specific situations.

In the present invention, unless expressly specified or limited otherwise, a first feature being "above" or "below" a second feature may indicate a direct contact between the first feature and the second feature, or an indirect contact between the first feature and the second feature through an intermediate medium. Furthermore, the first feature being "on", "above" and "over" the second feature may indicate that the first feature is directly above or obliquely above the second feature, or only indicate that the first feature has a height larger than the second feature. The first feature being "below", "under" and "underneath" the second feature may indicate that the first feature is directly below or obliquely below the second feature, or only indicate that the first feature has a height less than the second feature.

In the present invention, the terms "an embodiment", "some embodiments", "an example", "a specific example", or "some examples" mean that the specific features, structures, materials, or characteristics described in connection with the embodiment or example are included in at least one embodiment or example of the present invention. In the specification, schematic expressions of the above terms do not necessarily refer to the same embodiments or examples. Furthermore, the specific features, structures, materials, or characteristics described may be combined in any one or more embodiments or examples in a suitable manner. Moreover, without contradicting each other, those skilled in the art may combine and associate different embodiments or examples and features of different embodiments or examples described in the specification.

Although the embodiments of the present invention have been shown and described above, it may be understood that the above embodiments are illustrative and are not to be understood as limitations of the present invention, and that those skilled in the art may make changes, modifications, substitutions, and variations of the above embodiments within the scope of the present invention.

All the embodiments of the present invention may be executed alone or in combination with other embodiments, which are regarded as the protection scope of the present invention.

## Claims

1. A casing, comprising a liquid cooling plate and a lateral enclosure panel connected to an upper surface of the liquid cooling plate and arranged around a periphery of the liquid cooling plate, wherein the liquid cooling plate comprises a body and an outer connecting plate surrounding a periphery of the body, an upper surface of the outer connecting plate is farther away from the lateral enclosure panel relative to the upper surface of the body, a lower surface of the lateral enclosure panel comprises a first step surface and a second step surface, the first step surface is opposite to the upper surface of the body, the second step surface protrudes towards the outer connecting plate relative to the first step surface, a sealing element is arranged between the first step surface and the upper surface of the body, and the second step surface is fitted to and hermetically connected with the upper surface of the outer connecting plate.

2. The casing according to claim 1, wherein the lateral enclosure panel comprises a front beam and a rear beam arranged opposite to each other along a length direction of a bottom plate, and two side beams connected between the front beam and the rear beam and arranged opposite to each other in a width direction of the bottom plate, wherein the front beam comprises a front end plate and two inclined plates respectively connected to both sides of the front end plate, the two inclined plates are correspondingly connected with the two side beams, and the two inclined plates extend in a direction running away from the side beams and are obliquely arranged in a direction approaching each other.

3. The casing according to claim 2, wherein the front end plate and the two inclined plates are integrally formed, a joint of each inclined plate and the front end plate is rounded, and a thickness of each inclined plate gradually decreases along a direction approaching the front end plate.

4. The casing according to claim 2 or 3, further comprising a thermal insulation pad fitted to a side of the liquid cooling plate facing away from the lateral enclosure panel.

5. The casing according to claim 4, further comprising a bottom guard plate, wherein the bottom guard plate is fitted to a side of the thermal insulation pad facing away from the liquid cooling plate.

6. The casing according to claim 5, wherein a side of the bottom guard plate facing away from the thermal insulation pad has a second connecting groove recessed towards the thermal insulation pad, and the bottom guard plate, the thermal insulation pad, the liquid cooling plate and the lateral enclosure panel are connected through a connector, and a flange head of the connector is fitted in the second connecting groove.

7. The casing according to claim 6, wherein the side of the thermal insulation pad facing away from the liquid cooling plate has a first connecting groove recessed towards the liquid cooling plate, and a groove wall of the second connecting groove is arranged in the first connecting groove and fitted to an inner wall of the first connecting groove.

8. The casing according to any one of claims 5 to 7, wherein a part of the bottom guard plate protrudes away from the thermal insulation pad to form a cavity which opens towards the thermal insulation pad, the bottom guard plate comprises an outer ring edge surrounding an opening of the cavity, and the outer ring edge is fitted to and connected with the thermal insulation pad.

9. A battery pack, comprising a casing according to any one of claims 1 to 8.

10. A vehicle, comprising a battery pack according to claim 9.
